# EUROPEAN PATENT APPLICATION

(11) **EP 1 592 224 A1**
(43) Date of publication of application: **02.11.2005**
(21) Application number: 04708073.4
(22) Date of filing: 04.02.2004
(51) Int. Cl.: H04N 1/40, H04N 1/46, B41C 1/00

(54) **COLOR MATCHING METHOD IN COLOR IMAGE PRINTING PREPARATION**

(30) Priority: 04.02.2003 JP 2003064171
(71) Applicant: Photographic Art Research Laboratory, Tokyo 105-8423 (JP)
(72) Inventor: AOKI, Akira, Kawasaki-shi, Kanagawa 2110035 (JP); YAMAMOTO, Tatsuhiro, Hachinohe-shi, Aomori 0310841 (JP); SATO, Ryuichi, Ichikawa-shi, Chiba 2720035 (JP); YAMADA, Yutaka, Niiza-shi, Saitama 3520023 (JP); TAKAHARA, Ryo, Asaka-shi, Saitama 3510023 (JP)
(74) Representative: Paget, Hugh Charles Edward
(86) International application number: PCT/JP2004/001132
(87) International publication number: WO 2004/071071

(57) **Abstract**

A color matching method **characterized by** comprising the steps of executing, in a batch process, by applying a preset correction condition, color matching that is offered to a color separating job done in a printing preparation step by B who has received from A an order for printing documents including color images and that substantially matches the color of a digital image (on a computer monitor display in an image processing system) with the color of a corresponding original image, classifying the result into a normal digital image correctable to a color proximate to the color of the corresponding original image and a non-correctable digital image according to the preset condition, and sequentially correcting the image color of the former correction digital image as required by a known technique and individually correcting the image color of the latter image by a known technique.

## Description

### TECHNICAL FIELD

The present invention relates to a color matching method for making the color of a digital image substantially match with the color of an ordered color image used for preparatory work for printing of printed matter including color images, that is, color separation of a digital image.

### BACKGROUND ART

In printing of color images as well, the step-by-step process of "receipt of order-preparation for printing-printing" long adopted as the traditional process is employed. The problem of coloring matching remains as a problem to be improved on from the viewpoint of quality and work efficiency in the different stages of the process of the receipt of order, preparation for printing, and printing.

This problem differs in nature between the case where a color image to be printed (hereinafter referred to simply as an "original image") is received as a desired printing sample from a customer A by a processor such as a printer (hereinafter referred to as "B") (hereinafter referred to as "the first case") and the case where for example this printing sample and an MO or other storage medium storing digital data of the digital image corresponding to the original image (of the display on the monitor of a computer image processing system of A, that is, the "system of A") are received from A (hereinafter referred to as "the second case").

Explaining this more specifically, the first case is the case requiring the input of the color image ordered in a computer through a scanner of the system of B as digital data, comparison of the color of the digital image displayed on a monitor (lightness, contrast, chromaticity, and color balance) with the color of the corresponding original image, and, when a difference is visually recognized (hereinafter referred to as the case where there is a substantive difference), color matching work so that the colors of the corresponding original image and digital image of the monitor display visually match (hereinafter referred to as "substantially match"). The second case, which utilizes the MO in the preparatory step for printing, requires the display of the content of the received MO on a monitor as a digital image through a computer of the system of B and, when it is deemed to substantially differ from the color of the corresponding original image, correction of the color of the digital image displayed on the monitor to color substantially matching with the color of the corresponding original image.

In both cases, B has to make preparations for printing including color matching for the ordered original image. Further, the important work at the stage of preparations for printing is the color separation work for the digital image prepared by the color matching work. After this, confirmation work using a test printing is gone through and then the main printing work is proceeded with.

This color separation work, as has been well known up to now, is color separation work using the CMYK system. That is, in the first case, the digital data of an original image is stored through a scanner in a computer of the computer image processing system of B (hereinafter simply referred to as the "system of B") in the RGB mode. This data is converted to digital data (CMYK mode), or the digital data of the original image is stored in the computer of the system of B in the CMYK mode corresponding to the original image, then the digital image (CMYK mode) is separated in color and basic data for the plate-making work is prepared.

The color of the digital image displayed on the monitor covered by this color separation work (lightness, contrast, chromaticity, and color balance) matching with the color of the corresponding original image is an absolute condition of this work, so confirmation is required. When visual inspection finds a difference in the image color, only naturally, the color of the digital image in question has to be made to substantially match with the color of the original image by so-called color matching. This color matching and other image processing of the color digital image can be performed by commercially available digital image processing software, such as Adobe Photoshop®, etc. Incidentally, even if the digital image displayed on a monitor (RGB mode) is converted to the CMYK mode by a known technique such as the technique described in Adobe Photoshop® 4.0J User Guide, page 73 "Conversion of Mode", there is no change in the color of the digital image displayed on the monitor, so this color matching work can be performed either of the RGB mode or CMYK mode.

Further, usually, it is confirmed if the printed image obtained by the test printing based on the CMYK data obtained in this color separation work is satisfactory to A. If A is not satisfied with the results of this test printing, the practice has been to correct at least part of the data of the CMYK mode, run another test printing based on this corrected data, and obtain the confirmation of A as an additional step.

As clear from the above explanation, the color separation work is predicated on the color of the digital image supplied for the color separation work substantially matching the color of the corresponding original image, so the success of color matching work of a digital image governs the resultant quality and work efficiency of the preparatory work for printing.

However, if studying the conventionally performed color matching, since original images of the orders were prepared by different techniques, only naturally the original images differed in quality, so the work techniques became complicated from the viewpoint of ensuring quality of the color matching.

Explaining this more specifically, when, among original images of orders, for example images with large numbers of highlight points and shadow points, images conversely having none of the same, or digital images stored in received MOs or other storage media have been adjusted in level to extreme extents in the preparatory stage, sometimes the goal of color matching cannot be easily achieved by the image processing technique described in the above Adobe Photoshop® User Guide or other known techniques (in the specification of the present application, the term "known technique" will be used in a similar sense for the image processing techniques), so the practice has been for a worker to visually judge these images and separate them from other images (hereinafter referred to as "ordinary images") as special images. Therefore, the resultant quality and efficiency of the color matching work can be said without exaggeration to have had to rely heavily on the skill of individual workers.

Therefore, if studying the content of the work of color matching usually performed, in many cases the work is proceeded with by visual judgment of the worker for each received lot. Usually, in this case, if an image is judged as an ordinary image, the work has been proceeded with by image color correction conditions prepared in advance, while if an image is judged as a special image, troublesome color matching work has been performed by known techniques. Therefore, in the case of work proceeded with based on a random order, if encountering a special image in the middle of the series of work processes, the color matching work for the ordinary images will end up being delayed.

In view of this, while one practice has been to visually separate the special images from all of the images for each ordered lot, then successively perform image processing on the ordinary images separated in this work using preset color matching correction conditions, color matching work is usually performed by selecting, for each image, the correction conditions judged suitable from among a plurality of correction conditions set from work experience. Therefore, in this case as well, suitable judgment by the worker for each image was necessary and there was a problem in work efficiency.

### DISCLOSURE OF THE INVENTION

The present invention covers an order-based printing system for color images and has as its object the provision of a practical method enabling color matching work for making the color of a digital image (displayed on a monitor) substantially match with the color of an original image in preparations for printing (color separation work of digital image) both reliably and with a high work efficiency.

In the above explanation, it was clarified that the problem in conventional digital image printing of an original image, in particular digital image printing of a large number of original images of different colors (lightness, contrast, chromaticity, and color balance), with a high efficiency while maintaining a high level of quality of color printing lies in the problems in the conventional order-based printing system of original images (that is, the system by which color original images for which printing is ordered from a customer A are digitally printed by a printer B).

The present invention relates to a color matching method of a digital image in preparations for printing a digital image which performs digital image printing of an original image, in particular, digital image printing of a large number of color original images of different colors (lightness, contrast, chromaticity, and color balance), with a high efficiency while maintaining a high level of quality of color printing. To facilitate understanding, below, the present invention will be explained with reference to an example of an order-based printing system of an original image as a typical embodiment of the present invention. Specifically, a detailed explanation will be given focusing on a system by which an original image for which printing is ordered from a customer A is digitally printed by a printer B.

Even today when printing of color images utilizing printing preparation systems having computer image processing functions has spread, the so-called color matching work in the preparatory process for printing still has a problem which should be improved on as explained above. This problem is that regardless of the two modes (first and second cases) by which orders for printing images are received from A by B, there is a close relationship with the functions inherent to the equipment used for the preparatory work for printing. The present invention was developed based on this recognition. That is,
(1) First case: When B stores original images received from A together with an order in its computer as digital data through a scanner and displays them on a monitor as digital images, almost all of the digital images will be visually perceived as being different in color from the corresponding original images, though to different extents. Further, the cause is the effects of the performance inherent to the equipment used, so by correcting the image color to eliminate those effects, it should be possible to make the color of the digital images substantially match with the color of the original images.
(2) Second case: When B receives from A an MO storing digital data corresponding to original images together with an order, stores the digital data of the MO in the computer of the system of B, and displays this on a monitor as digital images as well, the conditions for correction used for the color matching work will differ from the case of (1), but if the image processing equipment used is the same, it should be possible to apply the correction conditions inherent to that equipment so as to make the color of the digital images substantially match with the color of the corresponding original images.

Here, "substantially matches" indicates the state where it is visually recognized that the color of an original image and the color of a corrected digital image substantially match.

However, in both cases, the correction conditions used for the color matching work have to be suitably set. This recognition does not apply when the ordered original image is a special image as explained in the above section on the "Background Art".

From this discovery, if the above special images can be separated out, the so-called color matching work performed at the first work step of the preparatory process of printing can be performed efficiently by applying the preset image color correction conditions (details explained later) and employing a batch processing technique. Further, since the number of the above special images is limited, it is judged that there would not be that much of an effect even if using color matching using conventional techniques.

That is, the color matching method for printing color digital images according to the present invention has as its basic technical idea to display digital images corresponding to ordered original images X (original digital image) on a monitor of a system of B, make the color of the original digital images visually match with the color of the corresponding original images by applying preset correction conditions (these correction conditions set by using an RGB reference color or other reference color image as an original image, making the color of this original image and the color of a digital image displayed on a monitor of an image processing system match by image color correction, reading the correction values for the lightness, contrast, chromaticity, and color balance, and using these as correction values to be applied to color matching processing covering other original images), and classifying the results as original digital images corrected to an image color similar to the color of the corresponding original images (type 1 images) and original digital images unable to be corrected (type 2 images: special images) (first step), perform independent color matching (fine correction) by known techniques on the type 1 images when they are recognized as being different in image color when visually compared with the color of the corresponding original images and perform color matching using known techniques on the type 2 images and display the corrected digital images corresponding to all original images on the monitor (second step), display all of the corrected digital images (CMYK mode), then separate the digital images in color (CMYK mode) (third step), run test printings corresponding to all original images by that color separation data (fourth step), compare and confirm the printed images from the test printings with the corresponding original images (fifth step), and, if the results of the test printings are acceptable, proceeding to the main printing, while if the results are not acceptable, correct the color separation data of the digital images (CMYK mode) and run other test printings (sixth step) and thereby complete the preparations for the main printing for all of the ordered images.

A first aspect of the present invention provides a color matching method, in a preparatory process for printing which B performs before main printing when receiving an order for printing of color original images X (hereinafter referred to as the "original images X") from a customer A, for making the color of digital images displayed on a monitor of a computer image processing system of B (hereinafter referred to as the "system of B") substantially match with the color of corresponding original images X before color separation work for printed images,
the color matching method for digital images in preparations for digital image printing comprising:
setting in advance the correction conditions for use for image processing for making the color of images displayed on a monitor of the system of B (CMYK) substantially match visually with the color of original images X for comparison, storing original images X ordered from a customer A as digital data in a computer of the system of B, displaying the digital images Y on the monitor, and correcting the color of the digital images using the above correction conditions;
classifying any digital images which cannot be corrected by the above image processing as special images and independently performing processing for correction of the image color of each special image by a known image processing method to make it substantially match with the color of the corresponding original image;
displaying the digital images (CMYK mode) corresponding to all original images X on the monitor by the above image processing,
performing known color separation on the digital data (CMYK mode) based on the color matching processing, and
running test printings based on the results of the color separation.

A second aspect of the present invention provides a color matching method for digital images of the first aspect of the invention characterized by performing the correction of the image colors of digital images Y displayed on a monitor by batch processing using the above correction conditions.

A third aspect of the present invention provides a color matching method for digital images of the first aspect of the invention characterized by correcting the color of the corrected digital images, corrected by image color correction of digital images using the preset correction conditions, to substantially match the color of the corresponding original images X by fine adjustment using known techniques when that color is close to the color of the original images X, but can be visually recognized to be different from the color of the original images X.

A fourth aspect of the present invention provides a color matching method for digital images of the third aspect of the invention wherein the digital images Y displayed on the monitor of the system of B are in an RGB mode, characterized by first displaying digital images (RGB mode) of color substantially matching the color of corresponding original images X on a monitor of the system of B and then converting them to the CMYK mode by a known method.

A fifth aspect of the present invention provides a color matching method for digital images of the fourth aspect of the invention characterized by converting digital images (RGB mode) displayed on the monitor to the CMYK mode, then using preset correction conditions to make the color of the digital images (CMYK mode) match the color of the corresponding original images X.

A sixth aspect of the present invention provides a color matching method for digital images of the fifth aspect of the present invention, wherein if a digital image has color which can be visually perceived as being different from that of a corresponding original image, as in the above-mentioned fifth aspect of the present invention, such additional supplemental color matching operation is (are) applied to create substantially color matched digital image(s) to the corresponding original color image(s) respectively.

A seventh aspect of the present invention provides a color matching method for digital images of the first aspect of the invention characterized by, when the customer A and B have a regular business relationship and B receives an order for printing color images from the customer A, obtaining an MO or other storage medium storing digital data corresponding to the original images X together with the original images X, storing the digital data of the storage medium in a computer of the system of B, and correcting the digital images displayed on a monitor to substantially match with the color of the original images X in image color correction work employing the regularly used image color correction conditions between A and B and separating uncorrectable digital images.

The eighth aspect of the present invention, provides a color matching method for digital images of the seventh aspect of the invention, characterized by setting a stational correction condition based upon utilizing a standard color image which is a common to both system A and B.

### EFFECTS OF THE INVENTION

The present invention, by using the above means, can provide a color matching method in preparation for printing of color images able to solve the problems of the prior art and exhibit superior effects as explained below.
(1) The success of so-called color matching in the step of preparation for printing documents including color images governs the quality of the printed matter, so work under highly precise correction conditions is necessary, as need not to be pointed out again here. However, this problem is substantially solved by application of the technique disclosed in Japanese Unexamined Patent Publication (Kokai) No. 2001-251523 "Method of Correction of Image Color in Transmission of Images". As an example of this technique, there may be mentioned a method of correction of image color in image transmission between computer image processing systems A and B (this transmission including interposition of an MO, etc.), the two systems each being configured by a computer having at least a digital data storage means, processing means, and sending/receiving means, the method of correction of image color characterized by first preparing a color image common to the two systems and by including preparatory work of setting correction values to be applied in image color correction for making a digital image transmitted from either of the two systems and displayed on a monitor match with the color of an original image using said common reference color image as a medium and image color correction work of transmitting an original image from either of the two systems to the other and performing image color correction work by applying said correction values, taking into consideration whether they are positive or negative, to an image displayed on the monitor transmitted to so as to display a digital image of a color substantially matching the color of the original image on the monitor of the system transmitted to.
   Therefore, when B receives an order for printing a color image from A, even if an MO is attached, it is clear that the method of storing the digital data of the original image in a computer of the system of B through a scanner of this system and displaying it as a digital image on a monitor enables color matching by higher precision correction conditions.
(2) Further, when A and B have a regular business relationship, if setting as the correction conditions of color matching the conditions applied when for example transmitting an RGB reference color image between A and B, so long as there is no change in the image processing equipment between the two, if A requests printing of an image, regular use of these conditions is possible.
(3) The performance of image processing equipment currently available on the market is designed for general use, so even when the relationship between A and B is not a regular one, setting the correction conditions to be applied to the color matching assuming the case of A using typical equipment circulating in the market is one method for achieving the object of the present invention - even if there is some effect on the work efficiency. Further, modification of the correction conditions from the results obtained by repeated use of the technique of the present invention may be considered one method for raising the precision.

As clear from the above explanation, the simple and systematic technique of the present invention enables highly accurate and highly efficient color matching work and can contribute greatly to streamlining color image printing work.

### BRIEF DESCRIPTION OF DRAWINGS

FIG. 1 shows 13 images used for a 2003 calendar ordered by the Photographic Art Institute to Vanfu Co.
FIG. 2 is an image for replacing one of the 13 images shown in FIG. 1.
FIG. 3 shows the image processing conditions (cyan tone curve) used for the experiment of Example 2 and Example 3.
FIG. 4 shows the image processing conditions (magenta tone curve) used for the experiment of Example 2 and Example 3.
FIG. 5 shows the image processing conditions (yellow tone curve) used for the experiment of Example 2 and Example 3.
FIG. 6 shows the image processing conditions (black tone curve) used for the experiment of Example 2 and Example 3.

### BEST MODE FOR CARRYING OUT THE INVENTION

Preparatory work for printing using the color matching method of the present invention according to the above basic technical concept will be explained next with reference to the results of experiments by the following embodiments.

### Examples

### Example 1

This example is an actual example of an order placed by the Photographic Art Institute (hereinafter referred to as "A") for preparation of a calendar for 2003 to Vanfu (hereinafter referred to as "B"). Explaining this specifically, at the time of receiving the order, B received from A the photographic images (original images) to be carried on the pages of the calendar and an MO storing digital data corresponding to the photographic images, that is, the above second case. However, in this actual example, the design of the calendar part was also commissioned to B, so in actuality, the digital images were prepared by adding the corresponding calendar parts to the above original digital images. For the purpose of simplifying the explanation, however, the explanation will be given of the individual work steps for printing of just the original images.

### [First Step]

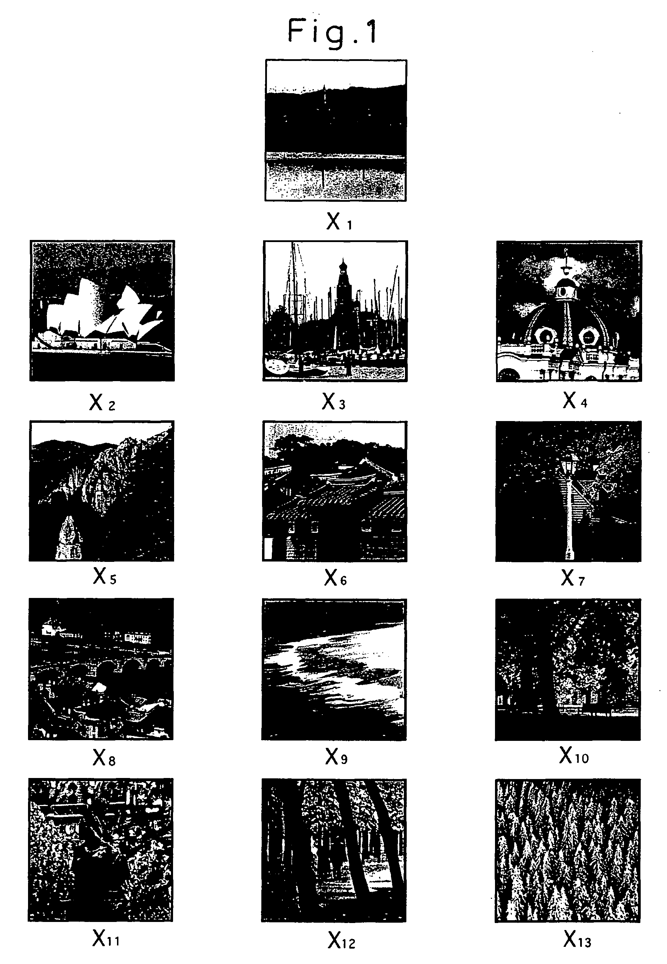

B received from A the 13 original images X₁ to X₁₃ shown in FIG. 1 and an MO storing the digital data corresponding to the images, then stored the digital data of the MO in the computer of the system of B. Next, digital images of the RGB mode ((original digital image) X₁ₐ, X₂ₐ,..... X₁₃ₐ) corresponding to the original images were displayed on the monitor of this system. The colors of these digital images were visually compared with the corresponding original images, whereupon it was visually confirmed that they all differed from the colors of the corresponding original images. Therefore, preset correction conditions (method of setting them explained later) were used to display original digital images X_{1b}, X_{2b}, X_{3b}.... X_{13b} which were then compared against the corresponding original images. As a result, it become apparent at a glance that the image color of the digital image X_{1b} was remarkably different from the color of the original image X₁. Other than the digital images X_{2b}, X_{10b}, the colors were extremely close to the colors of the corresponding original images. Therefore, the original digital images X_{1b}, X_{2b}, and X_{10b} were separated as specific images (type 2 images) from the other images (type 1 images).

Incidentally, the above correction conditions were set by the following technique. That is, an RGB reference color image (original image) was stored as digital data in a computer (Apple: Power Macintosh® G3) through a scanner (Microtek; Scan Maker 5) of the system of A and displayed as a digital image on a monitor (Mitsubishi: Diamond RD 21 G), the color of the digital image was corrected to substantially match with the color of the original image by a known technique, the corrected digital image was stored as digital data in an MO, the content of this MO was stored in a computer (Apple: Power Macintosh® G4) of the system of B and displayed as a digital image on a monitor (Sony: Trinitron® GPD-G500J), the color of this digital image was corrected to substantially match with the color of the original image by a known technique, and the correction data of the monitor display was used as the above image color correction conditions.

### [Second Step]

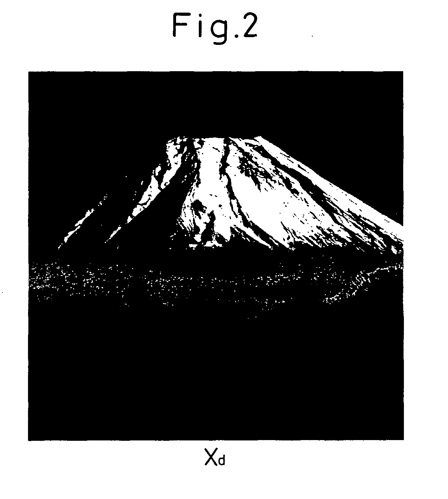

Next, the digital images X_{3b}, X_{4b}... X_{13b} of the type 1 images were visually compared with the colors of the corresponding original images again, some images were finely adjusted by known techniques to correct them to colors substantially matching the colors of the corresponding original images, and the type 2 images were corrected for image color individually by known techniques. Again, correction of type 2 images required extra trouble compared with type 1 images. In particular, in the case of the image X_{1b}, desirable results could not be obtained even with considerable trouble, so the original image was replaced with the original image (X_{d}) shown in FIG. 2 (FIG. 2). Digital images able to be supplied for color separation were able to be displayed on a monitor. The digital images X_{dc}, X_{2c}, X_{3c}..... X_{13c} prepared in this way were provided for the next color separation work.

### [Third Step]

After this, the corrected digital images X_{dc}, X_{2c}, X_{3c}.... X_{13c} (RGB mode) displayed on the monitor were converted in mode to the CMYK mode by a known technique and color separation work was applied to the converted CMYK mode digital images X_{dd}, X_{2d}, X_{3d}..... X_{13d}1.

### [Fourth and Fifth Steps]

A test printing run was made based on the color separation data obtained by the third step (fourth step) and all of the original images and corresponding test printed images were visually compared for confirmation (fifth step). As a result, all the test printings passed, so it was possible to proceed to the main printing by the above color separation data.

Further, when a test printing did not pass in the confirmation work of the fifth step, the nonpassing (failed) color separation image was again subjected to color separation work returning to the fourth step, then was test printed and confirmed so as to obtain satisfactory color separation data for all ordered images, whereupon the preparatory work for printing was ended. Further, by adopting the known batch processing system for the color correction of the digital images displayed on a monitor at the first step, it was confirmed that the same results could be obtained with higher efficiency.

Incidentally, in the experiment of the above example, the correction conditions for application to the color matching processing in the work of the first step were set in advance, but the reference color image used for finding the correction conditions also had an effect. Therefore, sometimes the carefully set correction conditions are unsuitable. In this case, it must be noted that the number of the type 2 images increases and there is a detrimental effect on the effects of the present invention.

### Example 2

This example is an example of a normal case where a printer B receives an order from a customer A as in Example 1, that is, a case where it receives just color images to be printed (original images) as desired printing samples.

In this case, an experiment was conducted employing the technique of storing original images received from A as digital data in a computer of the system B. After applying the color matching operation, using known techniques, whereby the color of the digital images indicated on the monitor of B is substantially matched to that of the corresponding original color images respectively, all of the above-mentioned color matched digital images are converted to respective digital images in CMYK mode, and then the color separation work is applied to these converted digital images. Further, in this example, the experiment was performed on the same original images as in Example 1, but from the results of Example 1, the original image X₁ was deleted from the start and instead the original image shown in FIG. 2 (X_{d}) was used.

### [First Step]

The original images X_{d}, X₂, X₃...... X₁₃ received at the time of the order from A were first stored as digital data through a scanner (Microteck: Scan Master) of the system of B in a computer (Apple: Power Macintosh® G4) and displayed as digital images (RGB mode) X_{da}, X₂ₐ, X₃ₐ..... X₁₃ₐ on a monitor (Sony: FD Trinitron® GDD-G-500J). These digital images were then converted in image mode by a known technique to the CMYK mode and the digital images X_{db}, X_{3b},..... X_{13b} were displayed.

### [Second Step]

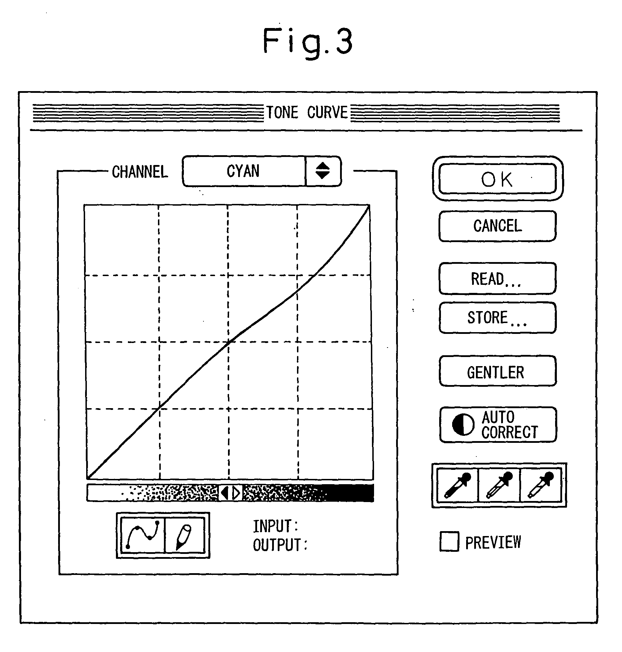

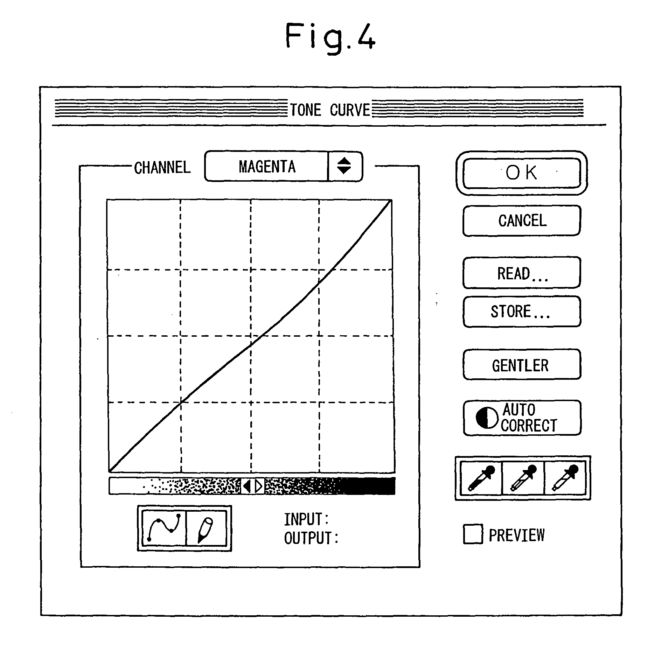

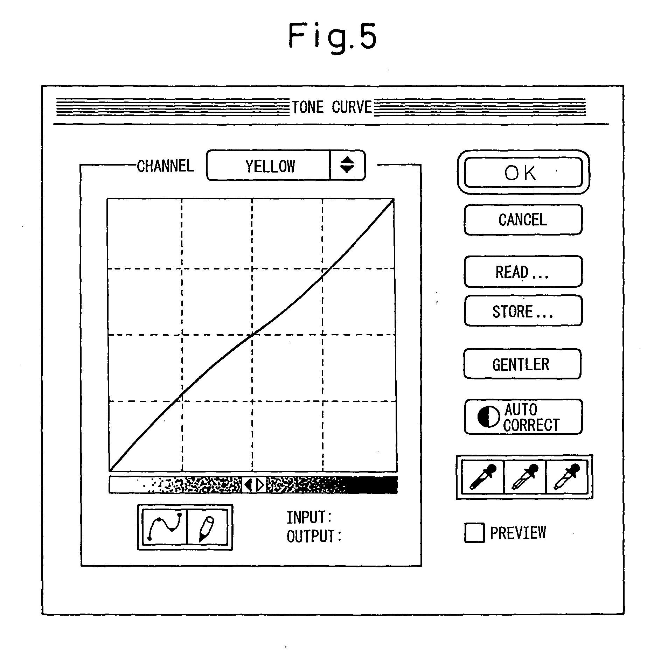

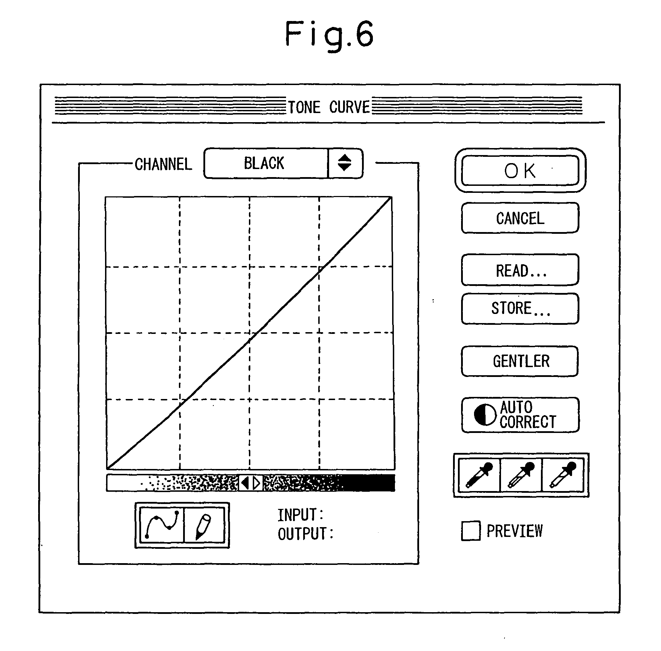

As the next step, a color correction operation is successively carried out on the respective digital images by means of a tone curve correction method utilizing the respective tone curves indicated in the drawings Fig. 3, Fig. 4, Fig. 5 and Fig. 6. In this work, the color of the original image for each image and the color of the corrected image were visually compared, the digital images (type 2 images) with remarkable differences in image color were separated from digital images with no great difference in color from the original images (type 1 image), and the latter digital images (type 1) were finely adjusted by known techniques at the time of each comparison work so as to make them substantially match with the colors of the original images, then the image colors of the former digital images (type 2) were successively corrected to substantially match with the colors of the corresponding original images by known image color correction techniques. The following results were obtained by the above-mentioned successive operations. That is, in this experiment, since the special digital image (type 2 images) X₁ is omitted, the original color images except two original color images X₂, X₁₀ could be treated as the original color image of type 1, while these original color image X₂, X₁₀ are treated as the original images of type 2. As the result of this experiment, it was found that the working operation can be carried out more efficiently than the above-mentioned first example.

### [Third Step]

Next, in the same way as in Example 1, color separation work, test printing, and main printing were performed for the digital images displayed on the monitor (for which image color correction was finished).

From the experimental results of Example 1 and Example 2 explained above, it becomes clear that the working operation and accuracy of the second experiment are superior than those of the first experiment. That is, except the business relation between A and B is maintained in constant condition, it is natural to understand that the color management systems of unspecified customers can not be understood as identical, accordingly even though the digital data of color image is received by MO, it is difficult to expect desirable results of color matching operation according to the present invention. However, in such condition, it is clear that the way of second example is better than that of the first example.

### Example 3

The advantages of the color matching method of the present invention have become clear by the experiments of the above examples, but the effects will be made clearer by explaining the preparatory work for printing performed by Vanfu for documents including images ordered from customers I, II, and III (Table 1).

**Table 1**

| Customer | Order content | Total number of pages | Number of color images (photographic images) |
|---|---|---|---|
| I | Mail order catalog | 128 | 338 |
| II | Photographic collection Book | 96 | 104 |
| III | Book | 2244 | 662 |

Further, this example relates to the so-called ordinary printing work of documents including images, but just the images are covered by the experiment for the purpose of simplifying the explanation.

Incidentally, the printing preparation system used for this experiment was comprised of a computer (Apple: Power Macintosh® G4), monitor (EIZO: Flexscan® T962), and scanner (Fuji: LuxScan 5600).

On the other hand, the contents of the orders from these customers differed greatly in their contents as shown in Table 1. According to the currently employed preparatory work for printing, color matching work was performed independently successively for each image in each work lot of each customer. As a result, the proportion of this work in the cost of preparatory work for printing of color images was by no means small.

As explained in detail next based on this fact, the preparatory work for printing was successively performed for each printing lot of each customer whereby the wonderful effect of the present invention could be confirmed. To simplify the explanation, first the work lot of the customer A will be explained in detail.

### (First Step)

338 images ordered from the customer were designated as the work lot A. All of the ordered color images (called "original color images") were read by a scanner and stored in a computer as digital data. This work was used to visually check if the color of the digital images displayed on the monitor did not match with the color of the original images ordered. (Note: this problem cannot be ignored as a practical phenomenon.)

### (Second Step)

Therefore, the color of the digital images displayed on the monitor (lightness, contrast, chromaticity, and color balance) was made to substantially match with the color of the corresponding original images by successively independently correcting the color of the digital images by conventional techniques, and the times required for the color matching work were recorded.

### (Third Step)

Next, preset correction conditions (same as in Example 2) were used to correct the color of these digital images by techniques similar to those of Example 2. As a result, with the exception of 68 images, it was possible to color correct the other 270 images to substantially match the corresponding original images.

### (Fourth Step)

Thereafter, the 68 digital images were successively corrected by known techniques. As a result, it was possible to display digital color images substantially matching with the color of the corresponding original images for all of the digital images.

The times required for this series of work, as shown in Table 2, could be reduced to 1/2 that of the case of use of the conventional technique.

**Table 2**

| | | | |
|---|---|---|---|
| Work lot | A | | |
| No. of digital images processed | | 338 | |
| Image processing time | Ordinary technique | 338 x 5 min = 20.8 hours | |
| | Technique of present invention | First step | 338 x 45 sec = 15,210 sec = 4.2 hours |
| | | Second step | 68 x 5 min = 20,400 sec = 5.6 hours |
| | | Total | 9.8 hours |

After an image processing experiment on the above lot A, the same technique was applied as in the above experiment on the lot A for correction of the color of the digital images displayed on the monitor for the work lots B and C. The results are shown in Table 3.

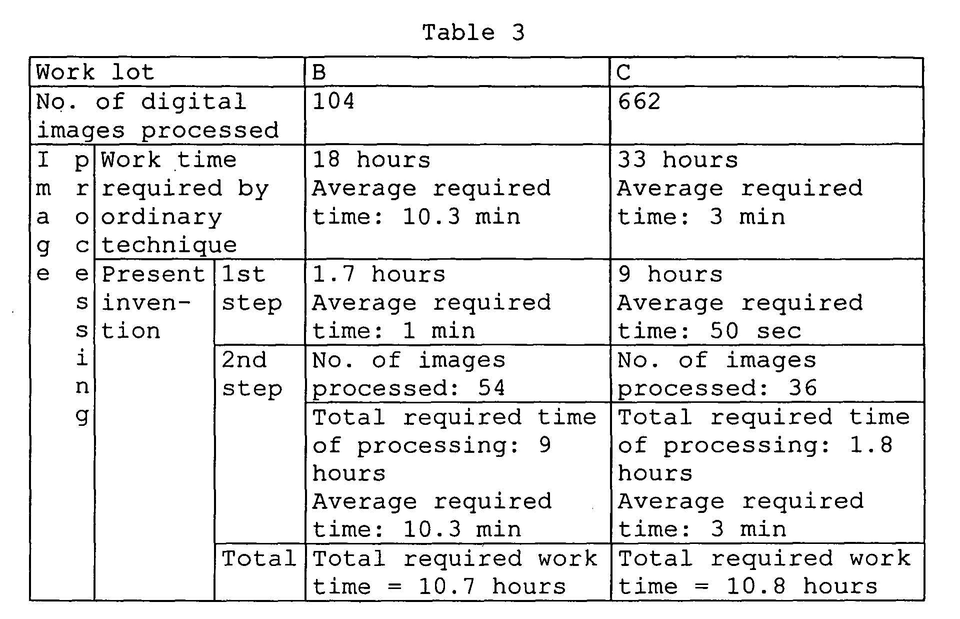

Therefore, summarizing the experimental results shown in Table 2 and Table 3:
(1) Compared with the conventional technique of individually processing the received color images of the ordered lots A, B, and C by ordinary techniques, that is, preset image processing conditions, according to the technique of the present invention, it is possible to shorten the work time greatly by 40% to 70% - though depending also on the quality (color) of the ordered images. Therefore, this work is made a work flow of work units of ordered lots so the work efficiency is greatly improved on the average.
(2) The work lots covered by this experiment differ for each customer, so the image processing conditions employed for the experiments do not necessarily match with the preparatory work of all ordered lots, but even so this contributes greatly to improvement of the work efficiency,
(3) Considering this from another angle, in the case of printing images from a customer with a regular relationship with the printing company, by employing the technique of for example Japanese Unexamined Patent Publication (Kokai) No. 2001-251523 "Method of Correction of Image Color in Transmission of Images", it is possible to raise the precision of the image processing conditions used for the experiments and as a result it becomes possible to perform this preparatory work for printing with a higher work efficiency.

## Claims

1. A color matching method, in a preparatory process for printing which a printer B performs before main printing when receiving an order for printing of color original images X (hereinafter referred to as the "original images X") from a customer A, for making the color of digital images displayed on a monitor of a computer image processing system of B (hereinafter referred to as the "system of B") substantially match with the color of corresponding original images X before color separation work for printed images,
said color matching method for digital images in preparation for digital image printing comprising:
setting in advance the correction conditions for use for image processing for making the color of images displayed on a monitor of the system of B (CMYK) substantially match visually with the color of original images X for comparison, storing original images X ordered from a customer A as digital data in a computer of the system of B, displaying the digital images Y on the monitor, and correcting the color of the digital images using the above correction conditions;
classifying any digital images which cannot be corrected by the above image processing as special images and independently performing processing for correction of the image color of each special image by a known image processing method to make it substantially match with the color of the corresponding original image;
displaying the digital images (CMYK mode) corresponding to all original images X on the monitor by the above image processing,
performing known color separation work on the digital data (CMYK mode) based on the color matching processing, and
running test printings based on the results of the color separation.

2. A color matching method for digital images as set forth in claim 1, **characterized by** performing the correction of image color of digital images Y displayed on a monitor by batch processing using the above correction conditions.

3. A color matching method for digital images as set forth in claim 1, **characterized by** correcting the color of the corrected digital images, corrected by image color correction of digital images using the preset correction conditions, to substantially match the color of the corresponding original images X by fine adjustment using known techniques when that color is close to the color of the original images X, but can be visually recognized to be different from the color of the original images X.

4. A color matching method for digital images as set forth in claim 3, **characterized by** first displaying digital images (RGB mode) of color substantially matching the color of corresponding original images X on a monitor of the system of B and then converting them to the CMYK mode by a known method when the digital images Y displayed on the monitor of the system of B are in an RGB mode.

5. A color matching method for digital images as set forth in claim 4, **characterized by** converting digital images (RGB mode) displayed on the monitor to the CMYK mode, then using preset correction conditions to make the color of the digital images (CMYK mode) match the color of the corresponding original images X.

6. A color matching method for digital images as set forth in claim 5, **characterized by** applying additional precise correction to digital images when color of said digital images operated on by the method of claim 5 is found to be different from corresponding original color images by a visual comparison test, whereby color digital images being substantially matched to the corresponding original color images can be indicated on said monitor of said system B.

7. A color matching method for digital images as set forth in claim 1, **characterized by**, when the customer A and Printer B have a regular business relationship and B receives an order for printing color images from the customer A, obtaining an MO or other storage medium storing digital data corresponding to the original images X together with the original images X storing the digital data of the storage medium in computer of the system B, and correcting the digital images displayed on a monitor to substantially match with the color of the corresponding original images X in image color correction work employing the regularly used image color correction condition between A and B and separating uncorrectable digital images.

8. A color matching method for digital images as set forth in claim 7, wherein said regularly used image color correction between A and B is obtained by a common standard color image to both systems A and B.
